# EUROPEAN PATENT APPLICATION

(11) **EP 1 959 660 A1**
(43) Date of publication of application: **20.08.2008**
(21) Application number: 08100363.4
(22) Date of filing: 11.01.2008
(51) Int. Cl.: H04N 1/00

(54) **Image reading device with duplex scanning capability and image forming apparatus having the same**

(30) Priority: 13.02.2007 KR 20070014908
(71) Applicant: Samsung Electronics Co., Ltd., Suwon-si, Gyeonggi-do 442-742 (KR)
(72) Inventor: Jeong, Seung Sik, Yongin-si Gyeonggi-do (KR); Shin, Sang Yob, Yeongtong, Suwon-si Gyeonggi-do (KR)
(74) Representative: Rooney, John-Paul

(57) **Abstract**

An image reading device (100) and an image forming apparatus having the same. The image reading device (100) includes a scan path (310) to scan and read image information by a scan unit (130), a duplex path (340) to connect a downstream side of the scan path (310) to an upstream side of the scan path (310) to achieve a duplex scanning operation, a discharge path (330) having a first end to connect with the scan path (310) and a second end to connect with a first document outlet port (142) to discharge a scanned document (D), and a reverse path (350) having a first end to connect with the duplex path (340) and a second end to connect with a second document outlet port (143) to reverse the direction of the document being fed to achieve a duplex scanning operation.

## Description

### BACKGROUND OF THE INVENTION

### 1. Field of the Invention

The present general inventive concept relates to an image reading device and an image forming apparatus having the same, and more particularly to an image forming apparatus and an image reading device capable of achieving duplex scanning of a document.

### 2. Description of the Related Art

Generally, an image forming apparatus is an apparatus that prints an image on a printing medium, e.g., paper, according to an inputted image signal. An image forming apparatus is classified as either a printer, a copying machine, a multi-function printer (MFP) which has multiple functions of printing, copying and scanning, and the like. Particularly, a MFP performs: a printing function of printing an image in response to image information output from an external apparatus such as a computer, etc., a scanning function of reading image information recorded on a document, a copying function of printing an image in response to scanned image information, and a fax function of transmitting scanned image information to a remote location through communication links.

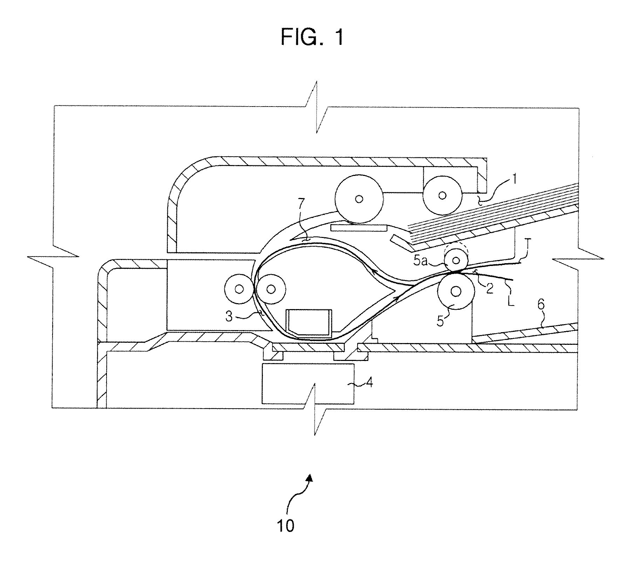

In order to achieve the above functions, a multi-function image forming apparatus is equipped with an image reading device 10. FIG. 1 illustrates a conventional image reading device 10.

As illustrated in FIG. 1, the conventional image reading device 10 includes a document inlet port 1 through which a document to be scanned is supplied, a document outlet port 2 through which the scanned document is discharged, and a C-shaped document feeding path 3 which is formed between the document inlet port 1 and the document outlet port 2. In the process of performing a simplex scanning, image information recorded on one surface of the document is scanned by an image sensor 4 while the document passes through the document feeding path 3. The document which is completely scanned is discharged to a discharge tray 6 by a discharge roller 5.

In order to achieve a duplex scanning, the image reading device 10 further includes a duplex path 7 disposed on the document feeding path 3, which connects a downstream side of the image sensor 4 and an upstream side of the image sensor 4. In the process of performing the duplex scanning, the document to be discharged by the discharge roller 5 after one surface has been scanned is fed in a reverse direction at a specific point of time to pass back through the duplex path 7, which exposes the reverse surface of the document, and the document then passes again through the document feeding path 3 via the duplex path 7, so that the other surface of the document is scanned by image sensor 4.

Accordingly, since the recently-developed conventional duplex scanning image reading device 10 is manufactured compactly, the duplex path 7 is short. This may create a problem in the duplex scanning process (i.e. during reverse feed), when a leading edge L of a document being discharged after passing through the image sensor 4 overlaps with a trailing edge T of the document which is being fed reversely by the discharge roller 5 between a discharge pinch roller 5a and the discharge roller 5. To solve this problem, the conventional image reading device 10 is configured to raise the discharge pinch roller 5a (illustrated by a dotted line in FIG. 1) when both ends of the document overlap with each other, so that a predetermined gap is created between the discharge pinch roller 5a and the discharge roller 5 to prevent the document from becoming jammed between the discharge roller 5 and the discharge pinch roller 5a.

However, because the above conventional image reading device 10 must be equipped with an additional drive source and cam mechanisms to move the overall discharge pinch roller 5a up and down, the inner structure of the device becomes complicated.

Also, in the conventional image reading device 10, when many documents are loaded on the discharge tray 6 by successive scanning of documents, a document which undergoes duplex scanning may interfere with other documents being loaded on the discharge tray 6 and thus the duplex scanning process is not achieved smoothly. Further, when the document to be duplex-scanned is fed in the reverse direction, a document being loaded on the discharge tray 6 may get pulled back into the image reading device together with the document to be duplex-scanned which may cause a jam or otherwise negatively effect the duplex scanning process.

### SUMMARY OF THE INVENTION

According to the present invention there is provided an apparatus as set forth in the appended claims. Other features of the invention will be apparent from the dependent claims, and the description which follows.

The present general inventive concept provides an image forming apparatus and an image reading device capable of preventing a document from being jammed at a document discharge unit, the forming apparatus and the image reading device having a simple structure.

The present general inventive concept also provides an image forming apparatus and an image reading device capable of preventing a document undergoing duplex scanning from interfering with a document which has been already discharged.

Additional aspects and utilities of the present general inventive concept will be set forth in part in the description which follows and, in part, will be obvious from the description, or may be learned by practice of the general inventive concept.

In one aspect of the present invention there is provided an image reading device having a scan unit to read document image information, a duplex path which connects a downstream side of the scan path with an upstream side of the scan path, a discharge path having a first end which connects with the scan path and a second end which connects with a first document outlet port to discharge a scanned document, and a reverse path having a first end which connects with the duplex path and a second end which connects with a second document outlet port to reverse a feeding direction of a scanned document to achieve a duplex scanning operation.

The image reading device may further include a document guide unit which is rotatably disposed between a first position in which the document guide unit guides a document having passed through the scan path to the reverse path and a second position in which the document guide unit guides a document fed reversely in the reverse path to the duplex path and to guide a document having passed through the scan path to the discharge path.

The image reading device may further include a discharge roller having a first portion disposed in the reverse path to feed a document in the reverse path, and having a second portion which is disposed in the discharge path to feed a document in the discharge path.

The image reading device may further includes a reverse pinch roller disposed in the reverse path to rotate and to contact a discharge roller, and a discharge pinch roller disposed in the discharge path to rotate and to contact the discharge roller.

The document guide unit may be rotatably disposed on a rotating shaft of a discharge roller.

The image reading device may further include a drive unit to move the document guide unit between the first position and the second position.

The image reading device may further include a document support tray to support a document discharged through the second document outlet port.

The reverse path may be disposed in a vertical direction away from the discharge path and the document guide unit may be disposed between the reverse path and the discharge path.

In another aspect of the present invention there is provided an image forming apparatus including an image reading device to scan a document including a main body which has a document inlet port a first document outlet port to discharge a scanned document and a second document outlet port formed between the document inlet port and the first document outlet port, a discharge path having a first end connected to the first document outlet port, a reverse path having a first end connected to the second document outlet port, and a document guide unit having a first surface formed to guide a document passing through the reverse path and a second surface formed to guide a document passing through the discharge path.

The image forming apparatus may further include a scan path of which a downstream side is selectively connected to the reverse path and the discharge path by the document guide unit, and a duplex path which connects a second end of the reverse path to an upstream side of the scan path.

The image forming apparatus may further include a discharge roller disposed between the reverse path and the discharge path and the discharge roller is formed to feed e a document in the reverse path and to feed a document in the discharge path.

The image forming apparatus may further include a solenoid to rotate the document guide in a vertical direction.

In another aspect of the present invention there is provided an image reading device including a main body having a scan path, a duplex path, a discharge path, and a reverse path to scan a document, a discharge pinch roller disposed on the discharge path to discharge the document, a reverse pinch roller to feed the document from the scan path to the duplex path, and a roller disposed between the discharge pinch roller and the reverse pinch roller and in contact with the discharge pinch roller and the reverse pinch roller to reverse the document to the duplex path and to discharge the document through the discharge path.

The roller may simultaneously rotate with the discharge pinch roller and the reverse pinch roller.

The discharge pinch roller, the reverse pinch roller, and the roller may simultaneously discharge a document and reverse the document to the duplex path.

The sum of lengths of a portion of the scan path and the duplex path may be shorter than a length of the document in the feeding direction.

The image reading device may also include a document guide unit having a first end rotatably coupled to the roller and a second end extended from the first end to guide the document to one of the discharge path and the reverse path from the scan path.

### BRIEF DESCRIPTION OF THE DRAWINGS

These and/or other aspects and utilities of the present general inventive concept will become apparent and more readily appreciated from the following description of the embodiments, taken in conjunction with the accompanying drawings, of which:
FIG. 1 is a view illustrating a conventional image reading device;
FIG. 2 is a sectional view illustrating an image forming apparatus in accordance with an embodiment of the present general inventive concept;
FIG. 3 is a view illustrating an image reading device of the image forming apparatus in accordance with an embodiment of the present general inventive concept;
FIG. 4 is a perspective view illustrating embodiments of a discharge roller, a document guide unit, and a drive unit of the image forming apparatus of FIGS. 2 and 3;
FIG. 5 is a view illustrating the simplex scanning operation of the image reading device in accordance with an embodiment of the present general inventive concept; and
FIGS. 6 and 7 are views illustrating the duplex scanning operation of the image reading device in accordance with the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below to explain the present general inventive concept by referring to the figures.

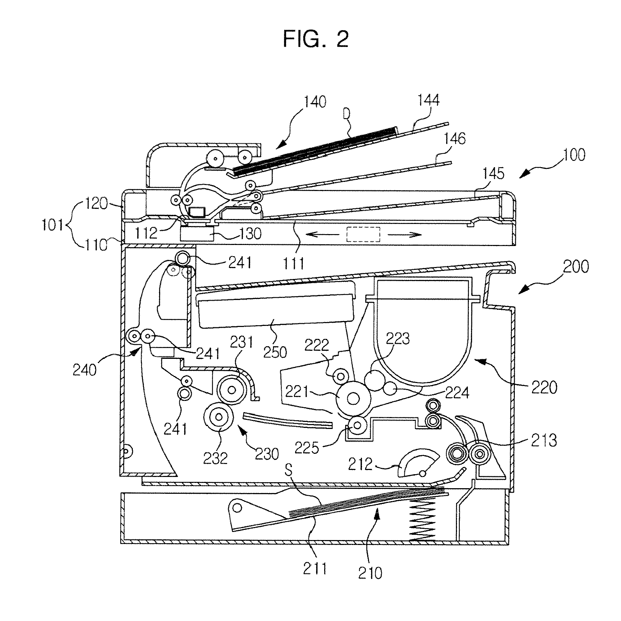

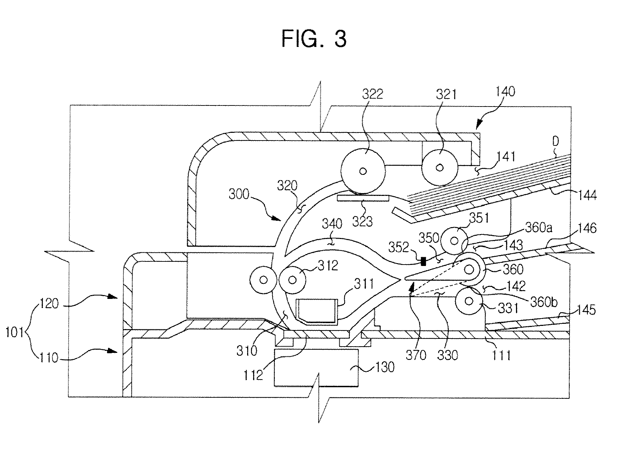

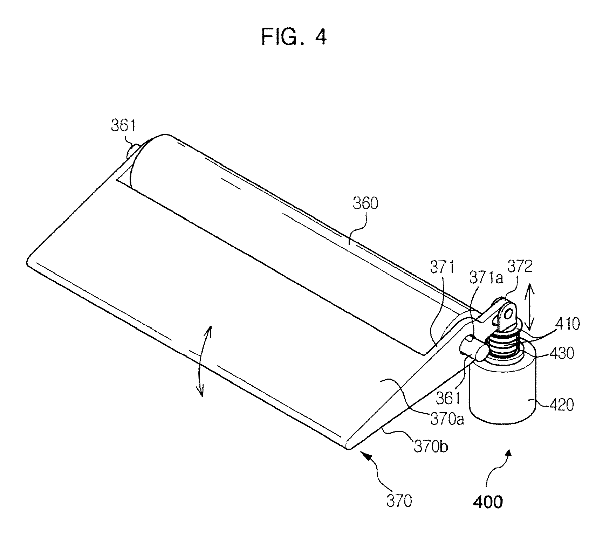

FIG. 2 is a sectional view illustrating an image forming apparatus in accordance with an embodiment of the present general inventive concept, FIG. 3 is a view illustrating an image reading device of the image forming apparatus in accordance with an embodiment of the present general inventive concept, and FIG. 4 is a perspective view illustrating embodiments of discharge roller, a document guide unit, and a drive unit of the image reading device of FIGS. 2 and 3.

As illustrated in FIG. 2, the image forming apparatus of the present general inventive concept includes an image reading device 100 that reads image information recorded on a document, and a printing device 200 that prints an image on a printing medium, e.g., paper.

The printing device 200 prints an image in response to a signal from the image reading device 100 or a signal from an external apparatus such as a computer, etc. (not illustrated) The printing device 200 includes a paper supply unit 210 to supply a printing medium, e.g., paper S, a developing unit 220 to develop the image on the paper S, an affixing unit 230 to affix the developed image to the paper S by applying heat and pressure to the paper S, and a paper discharge unit 240 to discharge the printed paper S.

The paper supply unit 210 includes a paper tray 211 on which the paper S is loaded, a paper advance roller 212 which advances the paper S loaded on the paper tray 211 sheet by sheet, and a feed roller 213 which feeds the advance paper S toward the developing unit 220.

The developing unit 220 includes a photosensitive member 221 on which an electrostatic latent image is formed by an exposure unit 250, a charge roller 222 which charges the photosensitive member 221, a developing roller 223 which develops an electrostatic latent image on the photosensitive member 221 into a toner image, a toner supply roller 224 which supplies toner to the developing roller 223, and a transfer roller 225 which pushes the paper S toward the photosensitive member 221 to transfer the toner image developed on the photosensitive member 221 onto the paper S.

The affixing unit 230 includes a heat roller 231 which has a heat source to heat the toner image transferred onto the paper S, and a press roller 232 which is disposed adjacent to the heat roller 231 to maintain a constant pressure against the heat roller 231.

The paper discharge unit 240 includes paper discharge rollers 241 which are mounted so as to discharge the paper S having passed through the fixing unit 230.

As illustrated in FIGS. 2 and 3, the image reading device 100 includes a main body 101 having a scanning frame 110 and a cover 120. The cover 120 is rotatably attached to the scanning frame 110 to open and close with respect to the top surface of the scanning frame 110.

A scan unit 130 to scan and read information recorded on a document is mounted inside the scanning frame 110. An automatic document feeder (ADF) 140 which automatically feeds documents to be successively scanned is disposed within the cover 120.

A flat glass 111 and an ADF glass 112 are disposed on the top surface of the scanning frame 110. The flat glass 111 is used to scan information on a document which is manually placed on the flat glass 111, and the ADF glass 112 is used to scan information on a document which is supplied automatically from the ADF 140. The scan unit 130 is disposed below the flat glass 111 and the ADF glass 112, and reads image information recorded on a document regardless of whether the document is manually placed on the flat glass 111 or automatically fed by the ADF 140.

The scan unit 130 radiates light to the document to be scanned and detects the light reflected from the document. By converting the light intensity into an electrical signal, the scan unit 130 reads image information from the document. The scan unit 130 may be configured as a contact image sensor (CIS) or a charge coupled device (CCD).

As illustrated in FIG. 3, the ADF 140 includes a document inlet port 141 through which a document to be scanned is supplied, a first document outlet port 142 through which the scanned document is finally discharged, a second document outlet port 143 through which a portion of the document whose first surface has been scanned is discharged during the duplex scanning process, a document feeding path 300 which is formed in the cover 120, and document advance roller 321 and separation roller 322 which are disposed along the document feeding path 300 to feed the document to be scanned.

The document inlet port 141 is formed at one end of the cover 120, and the first document outlet port 142 is disposed below the document inlet port 141. The second document outlet port 143 is disposed between the document inlet port 141 and the first document outlet port 142. A document supply tray 144, on which the document D to be fed by the ADF 140 is loaded, is provided in proximity to the document inlet port 141, and a document discharge tray 145, on which a scanned document is discharged and loaded, is disposed in proximity to the first document outlet port 142.

The document feeding path 300 includes a scan path 310 in which the scanning operation is performed by the scan unit 130, a supply path 320 having a first end to connect with the document inlet port 141 and a second end to connect with a first end of the scan path 310, and a discharge path 330 having a first end to connect with a second end of the scan path 310 and a second end to connect with the first document outlet port 142.

The document advance roller 321 advances a document loaded on the document supply tray 144, and the separation roller 322 separates the document advanced by the document advance roller 321. A friction pad 323 is disposed in proximity to the separation roller 322 to generate a frictional force required to separate the document D to be scanned from the other documents stacked in document supply tray 144.

The ADF glass 112 is disposed along the scan path 310 in order that the scan unit 130 can read image information recorded on the document D passing through the scan path 310. A white bar 311 is disposed above the ADF glass 112 to press on the document D so that it comes into close contact with the ADF glass 112. Scan rollers 312 are disposed along the upstream side of the ADF glass 112 in the scan path 310 to feed the document D which enters the scan path 310 from document feeding path 300.

The document feeding path 300 has a duplex path 340 which connects the downstream side of the scan path 310 to the upstream side of the scan path 310, and a reverse path 350 having a first end to connect with the duplex path 340 and a second end to connect with the second document outlet port 143. In the process of performing the duplex scanning, the document D whose first surface is scanned by the scan unit 130 can be fed again to the upstream side of the scan unit 130 through the reverse path 350 and the duplex path 340, so that a second surface of the document D can be scanned. In other words, the direction of the document D passing in a forward direction into the reverse path 350 is reversed at a specific point of time such that the document D then changes direction and advances in a backward direction into the duplex path 340.

A document support tray 146 to guide the document D being discharged through the second document outlet port 143 may be disposed between the document supply tray 144 and the document discharge tray 145 as illustrated in FIG. 3. The document support tray 146 supports the discharged document D to prevent the document D from hanging down under the force of gravity when the document D is discharged before it is fed in a reverse direction in the reverse path 350.

Because the image reading device 100 of the present general inventive concept is equipped with a reverse path 350 separate and distinct from discharge path 330, even though the length of the document feeding path 300 may be shorter than the length of the document D, both ends of the document D do not overlap with each other during the duplex scanning process. In other words, the leading edge of the document D which is discharged after a second surface of the document D has been scanned passes through the discharge path 330 and does not interfere with the trailing edge of the document D which is being fed in a reverse direction through duplex path 340 via the reverse path 350 so that the second surface of the document D can be scanned. Accordingly, both ends of the document D are separated from each other, and thus the document D is prevented from being jammed. Also, because the document D passing through the reverse path 350 is being fed in a reverse direction after being discharged through the second document outlet port 143 (which is provided separately from the first document outlet port 142), the document D undergoing the duplex scanning process does not interfere with other documents stacked and loaded on the document discharge tray 145.

A discharge roller 360 is disposed in proximity to the first document outlet port 142 and the second document outlet port 143 in the cover 120. A reverse pinch roller 351, which rotates to contact the discharge roller 360, is disposed in the reverse path 350, and a discharge pinch roller 331, which rotates to contact the discharge roller 360, is disposed in the discharge path 330. The discharge roller 360 is disposed between the reverse path 350 and the discharge path 330 such that a first portion 360a of the discharge roller 360 is disposed in the reverse path 350 to be in contact with the reverse pinch roller 351, and a second portion 360b of the discharge roller 360 is disposed in the discharge path 330 to be in contact with the discharge pinch roller 331. A rotation power source (not shown) may be connected to at least one of the discharge pinch roller 331, the reverse pinch roller 351, and the discharge roller 360 to feed, discharge, or reverse the document D.

While feeding the document D in the reverse path 350 to be discharged through the second document outlet port 143, the first portion 360a of the discharge roller 360 rotates in a first direction and then rotates in a second direction at a specific point of time to cause the document D to be fed back into the duplex path 340. The second portion 360b of the discharge roller 360 causes the document D that has been completely scanned to be discharged into the document discharge tray 145. That is, the discharge roller 360 functions as both a reverse roller to feed a document D in a reverse direction from reverse path 350 to duplex path 340 during the duplex scanning process as well as a forward roller to discharge a completely scanned document D into document discharge tray 145.

A sensor 352 to detect the position of a document D is disposed along the reverse path 350 in proximity to the discharge roller 360. When the sensor 352 detects a trailing edge of a document D as the document passes over the sensor 352, the discharge roller 360 is caused to reverse direction after a predetermined period of time and rotate to feed the document D in the reverse direction toward duplex path 340.

As illustrated in FIGS. 3 and 4, a document guide unit 370 is rotatably disposed between the reverse path 350 and the discharge path 330. The document guide unit 370 rotates between a first position (illustrated by a hashed outline in FIG. 3) where the document guide unit 370 operates to guide a document D having passed through the scan path 310 to the reverse path 350, and a second position (illustrated by a solid line in FIG. 3) where the document guide unit 370 guides a document D fed in an opposite direction in the reverse path 350 to the duplex path 340. When the document guide unit 370 is in the first position, the discharge path 330 is blocked. When the document guide unit 370 is in the second position, the reverse path 350 is connected with the duplex path 340 and the scan path 310 is connected with the discharge path 330.

An upper surface 370a of the document guide unit 370 is formed so as to guide a document D passing through the reverse path 350, and a lower surface 370b of the document guide unit 370 is formed so as to guide a document D passing through the discharge path 330.

Referring to FIG. 4, the document guide unit 370 may be rotatably disposed on a rotating shaft 361 of the discharge roller 360. In this embodiment, the document guide unit 370 has shaft-insertion portions 371 formed having through-holes 371a formed at opposite ends of document guide unit 370 through which both ends of the rotating shaft 361 are respectively disposed. To install the document guide unit 370 coaxially with the discharge roller 360 has an effect of reducing installation space of the document guide unit 370.

The document guide unit 370 is rotated in a vertical direction between the first position and the second position by a drive unit 400. In one embodiment, a solenoid is used as the drive unit 400.

The drive unit 400 includes a moving member 410 which is coupled to a coupling portion 372 and extends away from the discharge roller 360 from the shaft-insertion portion 371 of the document guide unit 370, an actuator 420 to move the moving member 410, and an elastic member 430 which elastically restores the position of moving member 410. When electric current is applied to the actuator 420, the moving member 410 descends to move the document guide unit 370 to the second position. When electric current is not applied to the actuator 420, the moving member 410 is restored upward to its original position by the elastic member 430 to move the document guide unit 370 to the first position.

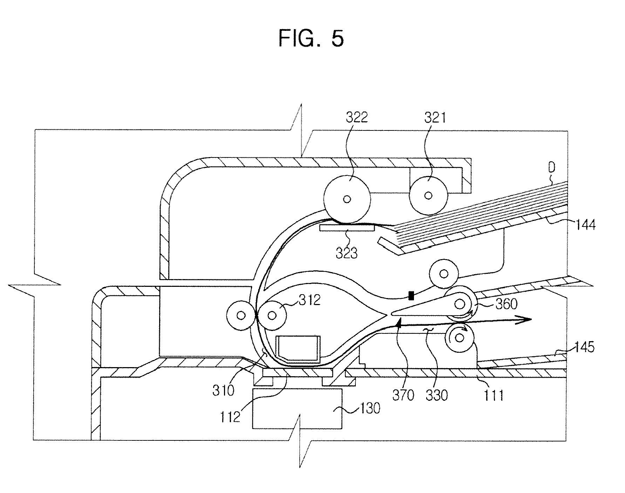

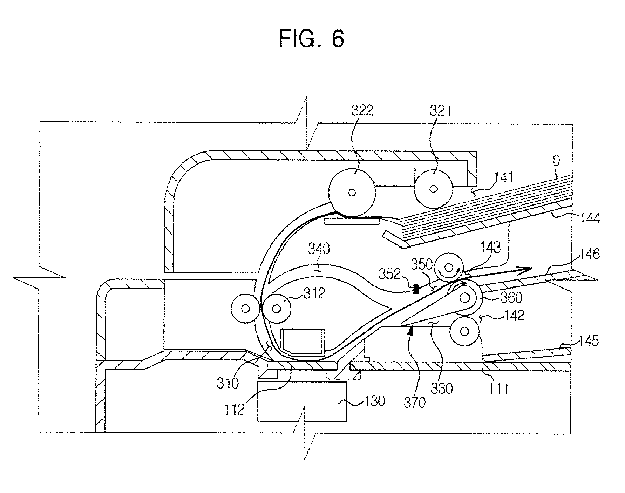

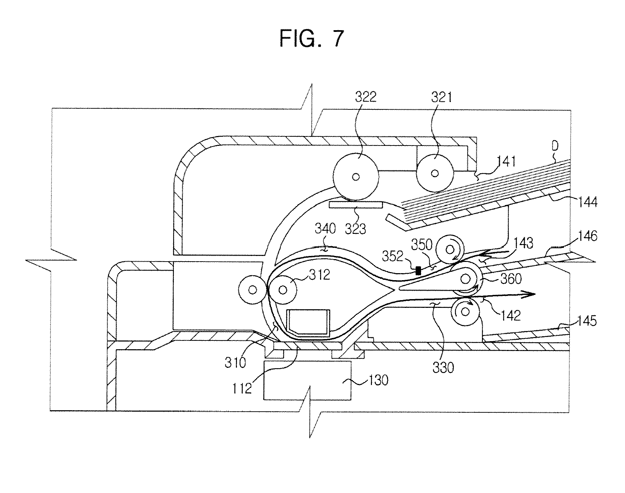

Hereinafter, the operation of the image reading device and the image forming apparatus according to the present general inventive concept will be described with reference to FIGS. 2 to 7. FIG. 5 is a view illustrating a simplex scanning operation of the image reading device 100 of the present general inventive concept, and FIGS. 6 and 7 are views illustrating duplex scanning operation.

First, in a simplex scanning operation during which only a first surface of the document D is scanned will be described with reference to FIG. 5. In the simplex scanning process, electric current is applied to the drive unit 400, and the document guide unit 370 is maintained in the second position. Accordingly, the scan path 310 connects with the discharge path 330.

To begin the simplex scanning operation, a document D having been placed on the document supply tray 144 is advanced by the document advance roller 321, and the advanced document D is then separated from subsequent documents while passing between the separation roller 322 and the friction pad 323 and is forwarded into the scan path 310 by the scan rollers 312. While the document D moves across the ADF glass 112 in the scan path 310, the scan unit 130 which is disposed below the ADF glass 112 reads image information recorded on the first surface of the document D. The document D, whose first surface has been completely scanned, is guided to the discharge path 330 by the document guide unit 370, and discharged to the document discharge tray 145 by the discharge roller 360 which rotates in the counterclockwise direction.

Next, the duplex scanning operation during which both surfaces (first and second surfaces) of a document D are scanned will be described with reference to FIGS. 6 and 7. As illustrated in FIG. 6, when electric current applied to the drive unit 400 is interrupted before starting the duplex scanning operation, or at any other time, the document guide unit 370 moves to the first position to block the discharge path 330.

To begin the duplex scanning operation, a document D having been placed on the document supply tray 144 is fed through the document feed path 300 by the document advance roller 321, the separation roller 322 and the scan rollers 312. While the document D moves across the ADF glass 112 in the scan path 310, the scan unit 130 scans a first surface of the document D.

The document D whose first surface has been scanned is guided to the reverse path 350 by the document guide unit 370 and moves to the discharge roller 360. At this time, the discharge roller 360 rotates in the clockwise direction for a predetermined period of time so that a leading edge of the document D is discharged to the document support tray 146 through the second document outlet port 143.

As illustrated in FIG. 7, once the sensor 352 detects that a trailing edge end of the document D has passed by the sensor 352, the discharge roller 360 begins to rotate in the reverse direction, i.e., in a counterclockwise direction, after a predetermined period of time. Thus, the feeding direction of the document D is reversed. At that time, the document guide unit 370 is driven to rotate to the second position by the drive unit 400.

The document D whose feeding direction has been reversed in the reverse path 350 is then guided to the duplex path 340 by the document guide unit 370, and the document D advances into the scan path 310 via the duplex path 340. Accordingly, the document D passes again by the scan unit 130, and the operation of scanning a second surface of the document D is achieved. Similarly to the simplex scanning operation, the document D whose second surface is completely scanned is then discharged to the document discharge tray 145 by the discharge roller 360 via the discharge path 330.

During a scan operation, if a printing command to print the image information read from a document D, as described above, or a printing command from an external apparatus such as a computer is inputted to the image reading device 100, a document paper S having been placed on the paper tray 211 is advanced by the paper advance roller 212 and is fed along the predetermined paths. While the paper S passes through the developing unit 220 and the affixing unit 230, an image is printed on the paper S. The printed paper S having passed through the affixing unit 230 is discharged by the paper discharge rollers 241.

As apparent from the above description, according to the present general inventive concept, although the length of the document feeding path is shorter than the length of the document in the duplex scanning process, the front end of the document which is discharged after the second surface is scanned does not overlap with the rear end of the document which is fed reversely in the reverse path. Accordingly, the document is prevented from being jammed due to the overlap between both ends of the document. Also, since the present general inventive concept can achieve the above effects with a simple structure, the apparatus can be manufactured compactly.

Further, since the document undergoing the duplex scanning process does not interfere with the documents loaded on the document discharge tray, the duplex scanning operation can be achieved more securely.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image reading device (100), comprising:
a scan path (310) having a scan unit (130) to read document image information;
a duplex path (340) which connects a downstream side of the scan path (310) with an upstream side of the scan path (310); and
a discharge path (330) having a first end which connects with the scan path (310) and a second end which connects a first document outlet port (142) to discharge a scanned document (D);
**characterised by**:
a reverse path (350) having a first end which connects with the duplex path (340) and a second end which connects with a second document outlet port (143) to reverse a feeding direction of a scanned document (D) to achieve a duplex scanning operation.

2. The image reading device of claim 1, further comprising:
a document guide unit (370) which is rotatably disposed between a first position in which the document guide unit (370) guides a document having passed through the scan path (310) to the reverse path (350) and a second position in which the document guide unit (370) guides a document fed reversely in the reverse path (350) to the duplex path (340) and to guide a document having passed through the scan path (310) to the discharge path (330).

3. The image reading device of claim 1 or claim 2, further comprising:
a discharge roller (360) having a first portion disposed in the reverse path (350) to feed a document in the reverse path (350), and having a second portion disposed in the discharge path (330) to feed a document in the discharge path (330).

4. The image reading device of claim 3, further comprising:
a reverse pinch roller (351) disposed in the reverse path (350) to rotate and to contact the discharge roller (360); and
a discharge pinch roller (331) which is disposed in the discharge path (330) to rotate and to contact the discharge roller (360).

5. The image reading device of any of claims 2 to 4, wherein the document guide unit (370) is rotatably disposed on a rotating shaft (361) of a discharge roller (360).

6. The image reading device of any of claims 2 to 5, further comprising:
a drive unit (400) to move the document guide unit (370) between the first position and the second position.

7. The image reading device of any of claims 2 to 6, wherein the reverse path (350) is disposed in a vertical direction away from the discharge path (330) and the document guide unit (370) is disposed between the reverse path (350) and the discharge path (330).

8. The image reading device of any preceding claim, further comprising:
a document support tray (146) to support a document discharged through the second document outlet port (143).

9. An image forming apparatus, comprising:
an image reading device (100) to scan a document, comprising:
a main body (101) which has a document inlet port (141), a first document outlet port (142) to discharge a scanned document (D), and a second document outlet port (143) formed between the document inlet port (141) and the first document outlet port (142); and
a discharge path (330) having a first end connected to the first document outlet port (142);
**characterised by**:
a reverse path (350) having a first end connected to the second document outlet port (143);
a document guide unit (370) having a first surface (370a) formed to guide a document passing through the reverse path (350) and a second surface (370b) formed to guide a document passing through the discharge path (330).

10. The image forming apparatus of claim 9, further comprising:
a scan path (310), of which a downstream side is selectively connected to the reverse path (350) and the discharge path (330) by the document guide unit (370); and
a duplex path (340) which connects a second end of the reverse path (350) to an upstream side of the scan path (310).

11. The image forming apparatus of claim 9 or claim 10, further comprising:
a discharge roller (360) disposed between the reverse path (350) and the discharge path (330), the discharge roller (360) is formed to feed a document in the reverse path (350) and to feed a document in the discharge path (330).

12. The image forming apparatus of claim 11, further comprising:
a reverse pinch roller (351) disposed in the reverse path (350) to rotate and to contact the discharge roller (360); and
a discharge pinch roller (331) disposed in the discharge path (330) to rotate and to contact the discharge roller (360).

13. The image forming apparatus of claim 11 or claim 12, wherein the document guide unit (370) is rotatably disposed to a rotating shaft (361) of the discharge roller (360).

14. The image forming apparatus of any of claims 9 to 13, further comprising:
a solenoid (420) to rotate the document guide unit (370) in a vertical direction.

15. An image reading device (100), comprising:
a main body (101) having a scan path (310), a duplex path (340), a discharge path (330), and a reverse path (350) to scan a document; and
a discharge pinch roller (331) disposed on the discharge path (330) to discharge the document;
**characterised by**:
a reverse pinch roller (351) to feed the document from the scan path (310) to the duplex path (340); and
a roller (360) disposed between the discharge pinch roller (331) and the reverse pinch roller (351) and in contact with the discharge pinch roller (331) and the reverse pinch roller (351) to reverse the document to the duplex path (340) and to discharge the document through the discharge path (330).

16. The image reading device of claim 15, wherein the roller (360) simultaneously rotates with the discharge pinch roller (331) and the reverse pinch roller (351).

17. The image reading device of claim 15 or claim 16, wherein the discharge pinch roller (331), the reverse pinch roller (351), and the roller (360) simultaneously discharge the document and reverse the document to the duplex path (340).

18. The image reading device of any of claims 15 to 17, wherein the sum of lengths of a portion of the scan path (310) and the duplex path (340) is shorter than a length of the document in a feeding direction.

19. The image reading device of any of claims 15 to 18, further comprising:
a document guide unit (370) having a first end rotatably coupled to the roller and a second end extended from the first end to guide the document to one of the discharge path (330) and the reverse path (350) from the scan path (310).
